Europäisches Patentamt

European Patent Office

Office européen des brevets

(11) Veröffentlichungsnummer: **0 278 087**
B1

(19)

(12) **EUROPÄISCHE PATENTSCHRIFT**

(45) Veröffentlichungstag der Patentschrift:
11.04.90

(21) Anmeldenummer: 87118436.2

(22) Anmeldetag: 12.12.87

(51) Int. Cl.⁴: **B27B 5/16**, B27G 5/02

(54) **Rollwagen mit Längenverschiebungsgestänge.**

(30) Priorität: 07.02.87 DE 3703805

(43) Veröffentlichungstag der Anmeldung:
17.08.88 Patentblatt 88/33

(45) Bekanntmachung des Hinweises auf die Patenterteilung:
11.04.90 Patentblatt 90/15

(84) Benannte Vertragsstaaten:
AT CH FR GB IT LI

(56) Entgegenhaltungen:
DE-A- 2 910 337
US-A- 4 441 394

(73) Patentinhaber: Haberkorn, Gottfried, Drosselweg 3,
D-7099 Adelmannsfelden(DE)

(72) Erfinder: Haberkorn, Gottfried, Drosselweg 3,
D-7099 Adelmannsfelden(DE)

(74) Vertreter: Lorenz, Werner, Dipl.-Ing., Fasanenstrasse 7,
D-7920 Heidenheim(DE)

ACTORUM AG

## Beschreibung

Die Erfindung betrifft einen Rollwagen mit Längenverschiebungsgestänge zum Zuschneiden von Schräg- oder Studiofenstern und/oder stirnseitiger Bearbeitung mit einem parallel zur Schnittebene über eine Linearführung verschiebbaren Unterteil und mit einem gegenüber dem Unterteil verschwenkbaren Oberteil mit einem quer zur Schnittebene verschiebbaren Längenanschlag, an dessen vorderen Ende ein Konterholz angeordnet ist.

Beim Fensterbau gibt es bei der Herstellung von Studiofenstern, wie z.B. Giebelfenster, die nicht rechtwinkelig sind, bei der Maschinenfertigung Probleme beim Anschlagen des Holzes auf einen schräg gestellten Rollwagen. Der Rollwagen muß nämlich jedesmal entsprechend der geforderten Winkelgrade der Fensterschräge eingestellt werden. Durch diese Schrägstellung beschreibt jedoch der auf dem Rollwagen befestigte Längenanschlag einen Kreisbogen. Von Nachteil dabei ist, daß sich durch diese Bewegung das Konterholz, welches auf dem Längenanschlag befestigt ist, von der Ablängsäge und dem Schlitzwerkzeug entfernt. Mit anderen Worten, durch die Schrägstellung gerät das Konterholz aus dem Bereich der Flugkreisdurchmesser der Schlitz- bzw. Zapfwerkzeuge und der Ablängsäge. Außerdem stimmt damit der Anschlag bzw. der Reiter bei dem eingestellten Winkel zur Holzlänge nicht mehr überein und zwar um den Betrag $\alpha = 1/\cos$.

Schiebt man nun das Konterholz zur Vermeidung einer Aussplitterung beim Sägen weiter nach vorne, dann stimmt das eingestellte Maß nicht mehr. Dies bedeutet, man muß stets die genaue Länge durch probieren und messen auf Maß kontrollieren, wodurch die Herstellung von derartigen Fenstern sehr zeitaufwendig und damit teuer ist.

Der vorliegenden Erfindung liegt daher die Aufgabe zugrunde, einen Rollwagen der eingangs erwähnten Art zu schaffen, durch den auch bei Schräg- oder Studiofenstern das Konterholz exakt unter Einhaltung des gewünschten Maßes nachführbar ist.

Erfindungsgemäß wird diese Aufgabe dadurch gelöst, daß der Längenanschlag mit einer Führungsstange verbunden ist, die quer zur Schnittebene verschiebbar ist und die im vorderen Bereich über einen Gelenkkopf an einer Ausgleichsführung angelenkt und zwangsgeführt ist, wobei die Ausgleichsführung einen derartigen Bahnverlauf aufweist, daß die Spitze des Konterholzes auch bei Winkeleinstellungen entlang einer Geraden parallel zur Schnittebene verschiebbar ist.

Durch die Zwangsführung über die Ausgleichsführung muß der Längenanschlag und die damit verbundene Führungsstange zwangsläufig auf der Kurvenbahn der Ausgleichsführung folgen. Es ist lediglich erforderlich, die Kurvenbahn der Ausgleichsführung entsprechend den konstruktiven Gegebenheiten und dem Aufbau des Rollwagens so zu wählen, daß die vordere Spitze des Konterholzes, das ja mit dem Längenanschlag verbunden ist, stets in der gewünschten Position im Bereich des Flugkreisdurchmessern verbleibt bzw. wenigstens annähernd parallel zur Schnittebene verschoben wird.

Als weiterer Vorteil ergibt sich dadurch ein stets gleich bleibendes Maß. Hierzu ist es lediglich erforderlich, den Maßstab entsprechend zu eichen, der dann auch bei einem Verschwenken unabhängig von der Winkelgröße gleich bleibt. Praktisch wird mit der erfindungsgemäßen Ausgleichsführung der entstandene Längenunterschied $\alpha = 1/\cos$ des eingestellten Winkels beim Drehen des schwenkbaren Teiles des Rolltisches ausgeglichen. Über die Verbindung mit dem Gelenkkopf wird die Führungsstange entsprechend nach vorne in dem gewünschten Maße herausgezogen. Durch die feste Verbindung des Längenanschlages mit der Führungsstange bleibt die Vorderkante des Konterholzes dabei auf einer Geraden und kann damit auf einen optimalen Abstand zum Schnitt eingestellt werden. Dies bedeutet, daß Aussplitterungen des Holzrohlings vermieden werden. Da gleichzeitig auch der Längenanschlag um die Maßdifferenz verschoben wird, bleibt das eingestellte Maß auch bei jeder beliebigen Gradeinstellung konstant.

In einfacher Weise kann die Verbindung der Führungsstange mit dem Oberteil über zwei Lagerböcke erfolgen.

Die Ausgleichsführung selbst kann über Lagerteile beliebiger Bauart, z.B. Gleit- oder Wälz- oder Kugellager, mit dem Unterteil verbunden sein.

Zur Wegbegrenzung und zur Vermeidung von Unfällen kann vorgesehen sein, daß die Ausgleichsführung an ihren beiden Enden mit Endanschlägen versehen ist.

Die Ausbildung des Gelenkkopfes kann beliebig sein. Voraussetzung ist lediglich, daß die Verbindung gelenkig ist. Hierzu kann er einen Bolzen aufweisen, der in eine Lagerbohrung einer Gleitführung gesteckt ist, die entlang der Ausgleichsführung verschiebbar mit dieser verbunden ist.

Selbstverständlich sind im Rahmen der Erfindung jedoch auch noch andere gelenkige Verbindungsarten möglich.

In einfacher Weise kann der Längenanschlag seitlich vor der Führungsstange angeordnet sein und über zwei auf Abstand voneinander angeordnete Befestigungsflansche mit der Führungsstange verbunden sein.

In bekannter Weise kann der Längenanschlag für das zu bearbeitende Holz mit einem Reiter für den Holzanschlag versehen sein.

Nachfolgend ist ein Ausführungsbeispiel der Erfindung anhand der Zeichnung prinzipmäßig näher beschrieben.

Es zeigt:

Fig. 1: eine Draufsicht auf den erfindungsgemäßen Rollwagen
Fig. 2: eine Seitenansicht (ohne Längenanschlag) des Rollwagens nach der Fig. 1
Fig. 3: einen Schnitt nach der Linie III-III der Fig. 1
Fig. 4-6: Prinzipdarstellung der Ausgleichskurve zu deren Berechnung

Der erfindungsgemäße Rollwagen ist grundsätzlich von bekanntem Aufbau, weshalb nachfolgend nur die für die Erfindung wesentlichen Teile näher beschrieben werden. Gleichzeitig bedeutet dies auch, daß die erfindungsgemäßen Teile im Bedarfsfalle auch nachträglich bei bekannten Rollwagen eingesetzt werden können.

Der Rollwagen weist einen feststehenden Unterteil 1 und einen damit über eine nicht näher dargestellte Dreheinrichtung verschwenkbaren Oberteil 2 auf. Über eine Linearführung, die eine Führungsstange 3 mit Führungsbuchsen 4 und 5 aufweist, kann das Unterteil parallel zur Schnittebene 6 der Säge 19 verschoben werden.

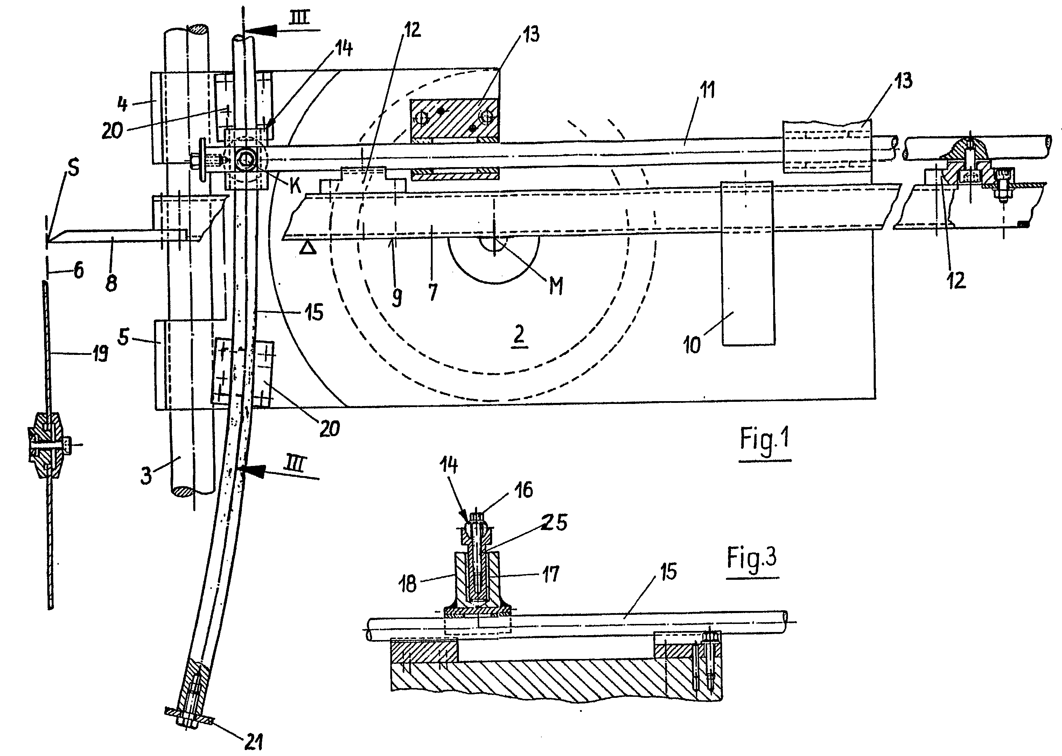

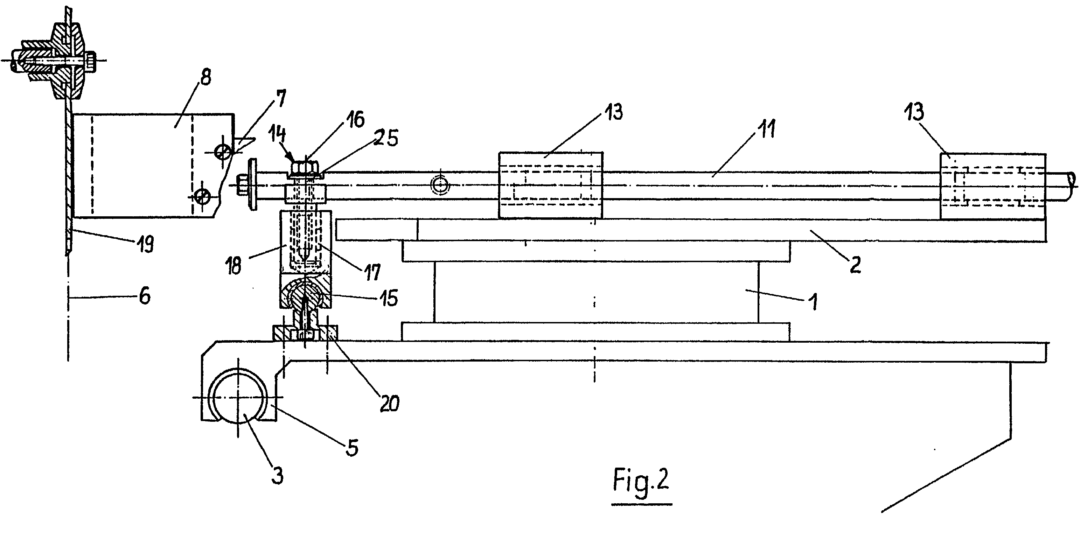

Auf dem Oberteil 2 ist ein Längenanschlag 7 angeordnet, dessen Längsachse rechtwinkelig zur Schnittebene 6 liegt. Am vorderen Ende des Längenanschlages 7 befindet sich ein Konterholz 8, das als Anlage für das zu bearbeitende Holz dient, welches an der vorderen Stirnseite 9 des Längenanschlages angelegt wird (siehe Dreieck in der Fig. 1). Selbstverständlich mußB das Konterholz 8 nicht aus Holz bestehen, vielmehr ist es in der Praxis im allgemeinen aus Kunststoff. Der Längenanschlag ist mit einem Maßstab und einem Reiter 10 als Holzanschlag für die Holzlänge versehen. Der Reiter 10 ist in Längsrichtung des mit einer Maßskala versehenen Längenanschlages 7 auf diesem verschiebbar.

Der Längenanschlag 7 ist seitlich vor einer Führungsstange 11 angeordnet und über zwei auf Abstand voneinander angeordnete Befestigungsflansche 12 mit dieser fest, jedoch lösbar über Schrauben verbunden. Die Führungsstange 11 ist wiederum über Lagerböcke 13 in ihre Längsrichtung verschiebbar.

Das vordere Ende der Führungsstange 11 ist über einen Gelenkkopf 14 mit einer Ausgleichsführung 15 gelenkig verbunden. Der Gelenkkopf 14 ist mit einem Bolzen 25 versehen, der durch eine Kontermutter 16 gesichert ist und der in eine Lagerbohrung 17 einer Gleitführung 18 gesteckt ist. Die Gleitführung 18 umfaßt teilweise die Ausgleichsführung 15. Auf diese Weise ist die Führungsstange 11 zwangsweise in Längsrichtung d.h. entlang dem Verlauf der Ausgleichsführung 15 geführt. Dabei stellt der Gelenkkopf 14 einen beweglichen Knotenpunkt K dar. Die Ausgleichsführung 15 ist über Lagerteile 20 auf dem Unterteil 1 befestigt und weist Endanschläge 21 auf, die als Schrauben mit Anschlagringen ausgebildet sind.

Wie ersichtlich, ist die Ausgleichsführung 15 eine gewölbte bzw. gebogene Stange. Deren Bogen bzw. Radius ist abhängig von dem Drehpunkt M des schwenkbaren Oberteiles 2, dem Abstand des Knotenpunktes K vom Drehpunkt M und dem Abstand des Knotenpunktes von der Spitze S des Konterholzes.

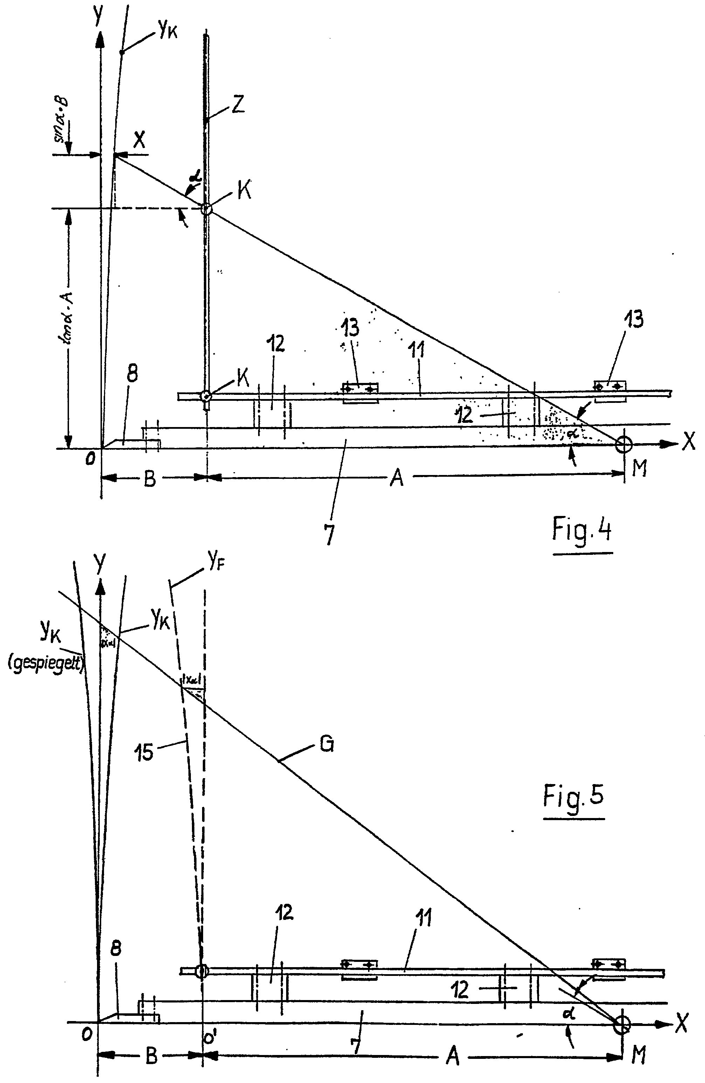

Nachfolgend ist deren Bahn in Verbindung mit den Fig. 4 bis 6 dargestellt und berechnet.

### 1. Mathematische Beschreibung der Ausgleichskurve (Fig. 4)

Die Zwangsführung wird als eine Gerade angenommen. Die zur Y-Achse auszugleichende Differenz bei größer werdendem Winkel $\alpha$ läßt sich durch Ausgleichskurve $Y_k$ bestimmen. Diese Kurve ist eine Überlagerung zweier trigonometrischer Funktionen:

$$Y_k = A \cdot \tan\alpha + B \cdot \sin \alpha$$

Dabei ist:

$Y_k$ = Ausgleichskurve
K = Knotenpunkt
M = Drehpunkt
$\alpha$ = eingestellter Winkel des Rollwagens
Die X-werte lassen sich analog mit:
$$X_\alpha = B - \cos\alpha \cdot B$$
bestimmen.

### 2. Mathematische Beschreibung der Ausgleichsführung (Fig. 5)

Die Ausgleichführung $Y_F$ wird durch eine Spiegelung der Ausgleichskurve $Y_k$ um die Y-Achse und Verschiebung um B in den neuen Koordinatenpunkt 0 beschrieben.

In dem neuen Schnittpunkt der Geraden G mit $Y_k$ und $Y_F$ müssen die Beträge der X-Werte der jeweiligen Koordinate gleich sein. Daraus ergeben sich kürzere Y-Werte für $Y_F$.

Dabei ist:

$Y_F$ = Ausgleichsführung
$Y_k$ = Ausgleichskurve
M = Drehpunkt
G = Gerade zum Winkel
$\alpha$ = eingestellter Winkel des Rollwagens

Die Kürzung S kann mit des Strahlensatzes berechnet werden und zwar:

$$\frac{Y_F}{Y_k} = \frac{A + |X_{(\alpha)}|}{A + B - |X_{(\alpha)}|} \Rightarrow Y_F \cdot \frac{A + |X_{(\alpha)}|}{A + B - |X_{(\alpha)}|} = S$$

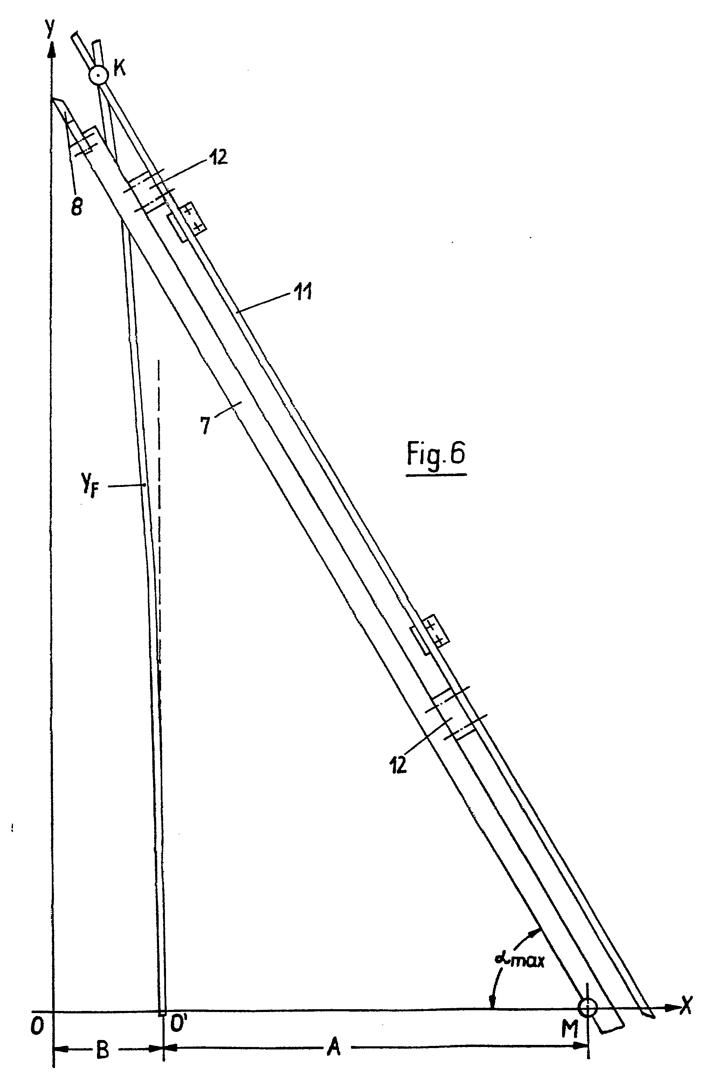

In der Praxis sollte die Ausgleichsführung mit dem Koordinatenursprung 0' so gewählt sein, daß ein Schwenkbereich von $\alpha$ max. von +/- 60 Grad abgedeckt werden kann. In der Fig. 6 ist diese Position prinzipmäßig dargestellt.

## Patentansprüche

1. Rollwagen mit Längenverschiebungsgestänge zum Zuschneiden und/oder stirnseitiger Bearbeitung von Schräg- oder Studiofenstern mit einem parallel zur Schnittebene über eine Linearführung verschiebbaren Unterteil und mit einem gegenüber dem Unterteil verschwenkbaren Oberteil mit einem quer zur Schnittebene verschiebbaren Längenanschlag, an dessem vorderen Ende ein Konterholz angeordnet ist, dadurch gekennzeichnet, daß der Längenanschlag (7) mit einer Führungsstange (11) verbunden ist, die quer zur Schnittebene (6) verschiebbar ist und die im vorderen Bereich über einen Gelenkkopf (14) an einer Ausgleichsführung (15) angelenkt und zwangsgeführt ist, wobei die Ausgleichsführung einen derartigen Bahnverlauf auf weist, daß die Spitze des Konterholzes (8) auch bei Winkeleinstellungen entlang einer Geraden parallel zur Schnittebene (6) verschiebbar ist.

2. Rollwagen nach Anspruch 1, dadurch gekennzeichnet, daß die Führungsstange (11) über zwei Lagerböcke (13) mit dem Oberteil (2) verbunden ist.

3. Rollwagen nach Anspruch 1 oder 2, dadurch gekennzweichnet, daß die Ausgleichsführung (15) über Lagerteile fest mit dem Unterteil verbunden ist.

4. Rollwagen nach Anspruch 1, 2 oder 3, dadurch gekennzeichnet, daß die Ausgleichsführung (15) an ihren beiden Enden mit Endanschlägen (21) versehen ist.

5. Rollwagen nach einem der Ansprüch 1 - 4, dadurch gekennzeichnet, daß der Gelenkskopf (14) einen Bolzen (15) aufweist, der in eine Lagerbohrung (17) einer Gleitführung (18) gesteckt ist, die entlang der Ausgleichsführung (15) verschiebbar mit dieser verbunden ist.

6. Rollwagen nach einem der Ansprüche 1 - 5, dadurch gekennzeichnet, daß der Längenanschlag (17) seitlich vor der Führungsstange (11) angeordnet ist und über zwei auf Abstand voneinander angeordnete Befestigungsflansche (12) mit der Führungsstange (11) verbunden ist.

7. Rollwagen nach einen der Ansprüche 1 - 6, dadurch gekennzeichnet, daß der Längenanschlag (17) mit einem Reiter (10) für den Holzanschlag auf Länge versehen ist.

## Revendications

1. Chariot à rails longitudinaux pour le découpage et/ou l'usinage frontal de fenêtres biaises ou de fenêtres de combles, comportant une partie inférieure agencée pour coulisser parallèlement au plan de coupe grâce à un guidage linéaire, et une partie supérieure agencée pour pivoter par rapport à la partie inférieure et pourvue d'un arrêt de longueur qui peut être déplacé transversalement au plan de coupe et à l'extrémité avant duquel est disposée une contre-plaque, caractérisé en ce que l'arrêt de longueur (7) est fixé à une barre de guidage (11) qui est coulissante perpendiculairement au plan de coupe (6) et qui est montée de manière articulée et guidée à l'avant par une tête articulée (14) montée sur un guide de compensation (15), ce guide de compensation ayant un tracé tel que l'extrémité de la contre-plaque (8) se déplace le long d'une droite parallèle au plan de coupe (6) lors d'ajustements angulaires.

2. Chariot selon la revendication 1, caractérisé en ce que la barre de guidage (11) est montée sur la partie supérieure (2) au moyen de deux paliers (13).

3. Chariot selon la revendication 1 ou 2, caractérisé en ce que le guide de compensation (15) est fixé à la partie inférieure au moyen de supports.

4. Chariot selon la revendication 1, 2 ou 3, caractérisé en ce que le guide de compensation (15) comporte des arrêts (21) à ses deux extrémités.

5. Chariot selon l'une des revendications 1 à 4, caractérisé en ce que la tête articulée (14) comporte un goujon (25) logé dans un alésage de palier (17) d'une pièce coulissante (18) qui est montée sur le guide de compensation (15) de manière à coulisser le long de ce guide.

6. Chariot selon l'une des revendications 1 à 5, caractérisé en ce que l'arrêt de longueur (7) est disposé devant le côté avant de la barre de guidage (11) et est fixé à cette barre (11) par deux brides de fixation (12) espacées l'une de l'autre.

7. Chariot selon l'une des revendications 1 à 6, caractérisé en ce que l'arrêt de longueur (7) est pourvu d'un cavalier (10) formant une butée pour définir la longueur d'une pièce de bois.

**Claims**

1. Rolling table with a longitudinal guiding arm for cutting to size and/or machining the front faces of inclined or studio windows, comprising a lower part, which can be displaced by means of a linear guide parallel to the cutting plane, and an upper part, which can be pivoted relative to the lower part and is provided with a longitudinal stop, which can be displaced transversely to the cutting plane and on the front end of which a counter wood member is arranged, characterised in that the longitudinal stop (7) is connected to guide rod (11), which can be displaced transversely to the cutting plane (6) and in the front area is flexibly connected ro a compensating guide (15) via a swivel head (14) and positively giuded, the path of the compensating guide being such that the tip of the counter wood member (8) can be displaced along a straight line parallel to the cutting plane (6) even when set at an angle.

2. Rolling table according to claim 1, characterised in that the guide rod (11) is connected to the upper part (2) via two bearing blocks (13).

3. Rolling table according to claim 1 or 2, characterised in that the compensating guide (15) is firmly connected to the lower part via bearing parts.

4. Rolling table according to claim 1, 2 or 3, characterised in that the compensating guide (15) is provided with end stops (21) at both ends.

5. Rolling table according to one of claims 1–4 characterised in that the swivel head (14) comprises a pin (15) which is inserted in a bearing bore (17) in a sliding guide (18) which is connected to the compensating guide (15) such that it can be displaced along the latter.

6. Rolling table according to one of claims 1–5, characterised in that the longitudinal stop (17) is arranged to the side in front of the guide rod (11) and connected to the latter via two attachment flanges (12) which are arranged at a spacing from one another.

7. Rolling table according to one of claims 1–6, characterised in that the longitudinal stop (17) is provided with a slider (10) for the wood stop in the longitudinal direction.

Fig.1

Fig.3

Fig.2

EP 0 278 087 B1

Fig. 4

Fig. 5

Fig.6